# EUROPEAN PATENT SPECIFICATION

(11) **EP 1 369 715 B1**
(45) Date of publication and mention of the grant of the patent: **02.11.2005**
(21) Application number: 03253471.1
(22) Date of filing: 03.06.2003
(51) Int. Cl.: G02B 6/134, G02B 6/10

(54) **Depolarizing optical fiber, depolarizing optical waveguide and fabrication method thereof**
Depolarisierende optische Faser, depolarisierender optischer Wellenleiter und Verfahren zu deren Herstellung
Fibre optique dépolarisante, guide d'onde dépolarisant et procédé de fabrication correspondant

(30) Priority: 03.06.2002 JP 2002161973
(43) Date of publication of application: 10.12.2003
(73) Proprietor: National Institute of Advanced Industrial Science and Technology, Tokyo 100-8921 (JP)
(72) Inventor: Fujimaki, Makoto, Tsukuba-shi, Ibaraki 305-0061 (JP)
(74) Representative: Hedley, Nicholas James Matthew

(56) References cited:
- EP-A- 0 294 037
- DE-A- 4 216 922
- US-A- 4 938 836
- US-A- 5 257 329
- US-A- 6 115 518
- TCHEBOTAREVA A L ET AL: "Effect of proton implantation on the photosensitivity of SMF-28 optical fiber" NUCLEAR INSTRUMENTS & METHODS IN PHYSICS RESEARCH, SECTION - B: BEAM INTERACTIONS WITH MATERIALS AND ATOMS, NORTH-HOLLAND PUBLISHING COMPANY. AMSTERDAM, NL, vol. 148, no. 1-4, 2 January 1999 (1999-01-02), pages 687-691, XP004156583 ISSN: 0168-583X
- FUJIMAKI M ET AL: "FABRICATION OF LONG-PERIOD OPTICAL FIBER GRATINGS BY USE OF ION IMPLANTATION" OPTICS LETTERS, OPTICAL SOCIETY OF AMERICA, WASHINGTON, US, vol. 25, no. 2, 15 January 2000 (2000-01-15), pages 88-89, XP000928543 ISSN: 0146-9592
- FUJIMAKI M ET AL: "ION-IMPLANTATION-INDUCED DENSIFICATION IN SILICA-BASED GLASS FOR FABRICATION OF OPTICAL FIBER GRATINGS" JOURNAL OF APPLIED PHYSICS, AMERICAN INSTITUTE OF PHYSICS. NEW YORK, US, vol. 88, no. 10, 15 November 2000 (2000-11-15), pages 5534-5537, XP001011912 ISSN: 0021-8979

## Description

The present invention relates to an optical fiber, an optical waveguide and a fabrication method thereof used for optical communication, optical sensors, optical signal processing and the like. More particularly, the present invention relates to an optical fiber and an optical waveguide capable of obtaining depolarized light whose polarization is eliminated, and to a technique of implementing an optical fiber, optical waveguide and optical component whose polarization dependence is eliminated, reduced or improved by depolarizing light propagating in them.

Generally, the polarization state of light propagating through an optical fiber is maintained for a short range. However, it can vary at random as the range increase because of fluctuations in the optical fiber core diameter, vibration or temperature variations. Since a lot of optical communication devices and sensors utilizing an optical fiber vary their characteristics depending on the polarization state of the light propagating through the optical fiber, it is sometimes necessary to control the polarization state. For example, a Raman fiber amplifier for optical fiber communication has operation characteristics greatly dependent on the polarization state of its excitation light. Accordingly, the excitation light is usually emitted into the Raman fiber amplifier after undergoing the depolarization by a depolarizer. As for the optical sensors, since the random variation in the polarization state can deteriorate their sensitivity, it is not rare to use the light passing through the depolarization by a depolarizer.

As optical fiber depolarizers, the following techniques have been developed and are used at present. A first method splits the light propagating through an optical fiber into two parts with an optical fiber coupler, and feeds one of them back to the optical fiber (USP 5,933,555 and USP 5,218,652); and a second method, utilizing a Lyot type depolarizer, interconnects two polarization maintaining optical fibers with the lengths of L and 2L, with their polarization maintaining planes being inclined by π/4 to each other.

A third method (USP 5,257,329) depolarizes light by utilizing a small concentration of refractive or diffractive microparticles in an optical core.

On the other hand, an optical waveguide usually maintains the polarization state of light propagating in optical waveguide. Generally, the optical waveguide is fabricated by depositing a layer to be formed into a lower cladding on a planar substrate, followed by depositing a core layer thereon, forming the core layer to the shape of the optical waveguide by reactive ion etching, and depositing an upper cladding thereon. The optical waveguide has birefringence in many cases. This is because the optical waveguide has different thermal expansion coefficients between a silicon substrate used as its planar substrate and silica-based glass layers constituting its waveguide, and this produces stress within the glass, thereby bringing about the birefringence. Thus, the optical waveguide has the birefringence and maintains the polarization state, as well. As a result, an optical component formed in the optical waveguide such as an arrayed waveguide grating or Bragg reflection grating has a problem of polarization dependence that the optical component has different operatingwavelengh depending on the polarization states, or more specifically, on its TE polarized wave and TM polarized wave.

As for the optical fiber, when its core has birefringence, elimination of the polarization dependence also becomes a problem.

To eliminate the polarization dependence from an arrayed waveguide grating, for example, a method is usually employed that makes a groove in the arrayed waveguide and inserts a waveplate into the groove (Y. Inoue et al, "Polarization mode converter with polyimide half waveplate in silica-based planar lightwave circuits" IEEE Photonics Technol. Lett. Vol. 6, p. 626, 1994). In addition, a method is proposed which eliminates the polarization dependence from a planar optical waveguide by providing an ion implanted layer on the top surface of a lower cladding layer before a core layer is deposited thereon (Japanese patent application laid-open No. 10-239547 (1998)).

However, as for the conventional optical fiber depolarizer, it is necessary to process the optical fiber very accurately in their fabrication. As a result, its fabrication becomes complicated and very expensive.

On the other hand, as for the elimination method of the polarization dependence in the arrayed waveguide grating by inserting the waveplate into the groove, the assembly process of making the groove and inserting the waveplate into the groove is necessary, which also complicates the process. In addition, the technique cannot be used when the waveplate cannot be inserted into a device such as a Bragg reflection grating.

As for the method of eliminating the polarization dependence by forming the ion implanted layer on the top surface of the lower cladding layer before depositing the core layer, it is necessary to implant the ions into almost the entire region of the deposited lower cladding. In addition, it is necessary for this method to implant nitrogen ions, oxygen ions or silicon ions by a large amount of 1 × 10¹⁷/cm². These two factors offer a problem of greatly increasing the fabrication time. Furthermore, the method is likely to degenerate significantly the characteristics of the material of the lower cladding because of the ions implanted at a high concentration as mentioned above.

The present invention is implemented to solve the foregoing problems. It is therefore an object of the present invention to provide a novel depolarization method that eliminates the polarization of light propagating through an optical fiber or optical waveguide, to provide an optical fiber and optical waveguide capable of producing depolarized light, and to provide an optical component whose polarization dependence is eliminated by depolarizing light propagating through them.

To accomplish the foregoing object, according to a first aspect of the present invention, there is provided a method of fabricating an optical component that has substantially no polarization dependency as set out in the accompanying claims.

It is preferable that the implantation of the ions be carried out into a part or all of the optical fiber or the optical waveguide.

The acceleration energy of the ions may be varied during implantation of the ions to vary thickness of the region where the ions stop by the loss of kinetic energy.

The optical fiber and the optical waveguide may be rotated during implantation of the ions to vary thickness of the region where the ions stop by the loss of kinetic energy.

The direction of radiation of ion beams may be altered during implantation of the ions to vary thickness of the region where the ions stop by the loss of kinetic energy.

An optical component relating to the present invention is characterized in that its polarization dependence is eliminated or reduced by using the foregoing optical fiber or the optical waveguide. Therefore the present invention can provide optical components that may be an optical device, e.g. an optical communication device or sensor, whose characteristics depend on the polarization state of the light it receives.

According to a second aspect of the present invention, there is provided a method of depolarizing light which comprises propagating the radiation through an optical component formed by the method of the first aspect of the present invention. The optical component may be an optical communication device or sensor, whose characteristics depend on the polarization state of the light it receives.

The ions to be implanted may include charged particles of atoms whose atomic numbers are equal to or smaller than 36.

According to the present invention, it is possible to depolarize the light propagating through the optical fiber or optical waveguide easily by implanting the ions into the optical fiber or optical waveguide.

Thus, according to the present invention, the optical fiber and optical waveguide that supply the depolarized light are implemented without difficulty. Accordingly, the optical fiber, optical waveguide and optical component without the polarization dependence are easily provided.

Moreover, since the ion implantation technique in accordance with the present invention can reduce the ion dose implanted and limit the ion implanted reign to smaller area, the fabrication of the optical waveguide or optical component without the polarization dependence can take time less than the conventional technique.

The above and other objects, effects, features and advantages of the present invention will become more apparent from the following description of embodiments thereof taken in conjunction with the accompanying drawings.
Fig. 1A is a perspective view illustrating the principle of the present invention;
Fig. 1B is a front view of the object of Fig. 1A;
Fig. 2 is a perspective view illustrating a structure and fabrication method of the optical fiber of a first embodiment in accordance with the present invention;
Fig. 3A is a front sectional view illustrating a structure and fabrication method of an optical waveguide of a second embodiment in accordance with the present invention;
Fig. 3B is a perspective view of the optical waveguide of the second embodiment;
Figs. 4A, 4C, 4E and 4G are front sectional views illustrating individual steps of a fabrication process of a variation of the second embodiment in accordance with the present invention; and
Figs. 4B, 4D, 4F and 4H are side sectional views illustrating the individual steps.

The optical fiber and optical waveguide of the embodiments according to the present invention will now be described with reference to the drawings.

### (PRINCIPLE OF PRESENT INVENTION)

It is known until now that implanting accelerated ions into an optical fiber or silica glass, a material for constituting an optical fiber, brings about variations in the refractive index or density (A. L. Tchebotareva et al, "Effect of proton implantation on the photosensitivity of SMF-28 optical fiber" NIMB Vol. 148, p. 687, 1999; and M. Fujimaki et al, "Ion-implantation-induced densification in silica-based glass for fabrication of optical fiber gratings" J. Appl. Phys. Vol. 88, p. 5534, 2000). In addition to these phenomena, the inventor of the present invention discovered that implanting accelerated ions into silica-based glass for constituting an optical fiber or optical waveguide can depolarize light passing near the position where the implanted ions stop by the loss of kinetic energy. Furthermore, the inventor also discovered that the depolarization occurs to a smaller extent in a region through which the ions passed.

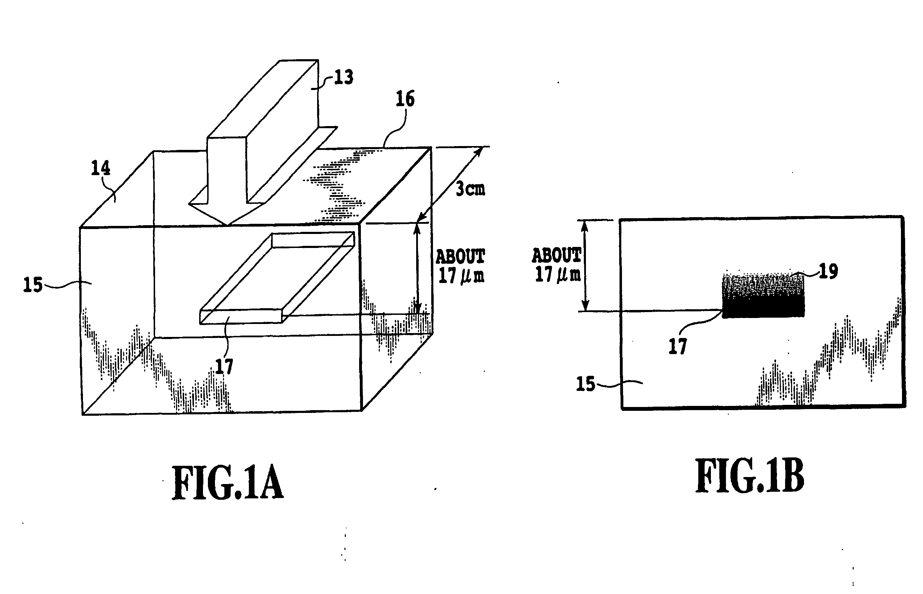

Figs. 1A and 1B illustrate an example of an experiment by the inventor of the present invention for explaining the principle of the present invention. Fig. 1A is a perspective view schematically illustrating the state in which boron ions 13 accelerated at 15 MeV are implanted to a dose of 5 × 10¹³/cm² into the top surface 14 of a silica glass plate over a perspective of 3 cm. In Fig. 1A, the reference numeral 15 designates a front surface of the silica glass plate, 16 designates a rear surface of the silica glass plate, and 17 designates a position where the ions stop by the loss of kinetic energy.

Fig. 1B is a front view showing a polarization state when linearly polarized light is irradiated into the rear surface 16 of the silica glass plate, and the polarization state is observed at the front surface 15. A blackened part 19 in Fig. 1B indicates a region in which the light is depolarized. The more darkness of the part 19 indicates the more depolarization.

As for the silica glass plate with the width of 3 cm, the polarized light usually passes through the silica glass plate with maintaining the polarization state. In fact, before the implantation of the ions 13, it is observed that the light passes across the silica glass plate with maintaining the polarization state.

After the implantation of the ions 13, the depolarization is achieved near the position 17 where the implanted ions 13 stop by the loss of kinetic energy, that is, the position close to the depth nearly equal to the projected range of ions from the top surface 14 of the glass. In addition, as indicated by the reference numeral 19, the depolarization is observed at a portion a few micrometers above the position 17 where the ions 13 stop. The phenomenon of the depolarization occurs when any kinds of ions are implanted.

### (FIRST EMBODIMENT)

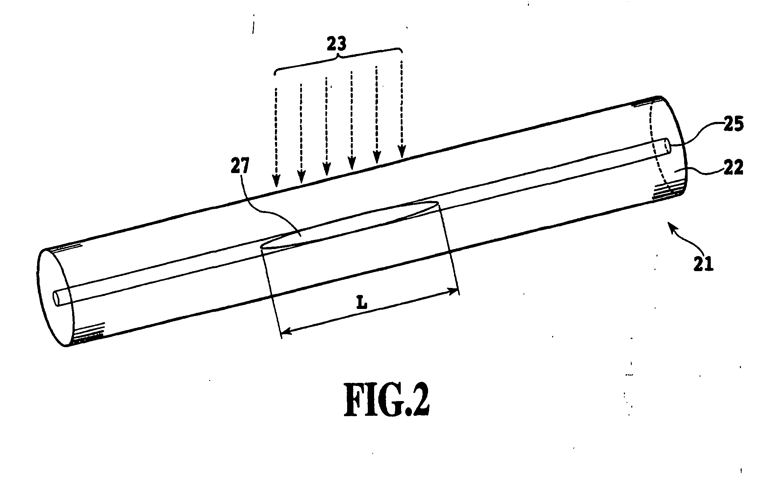

The inventor of the present invention invented a technique of using the foregoing phenomenon for depolarizing the light propagating through the optical fiber or optical waveguide. To depolarize the light propagating through the optical fiber using the technique, the ion implantation should be made from the outside of a cladding 22 of an optical fiber 21 to a part of the optical fiber 21 in such a manner that the ions 23 stop near a core 25 by the loss of kinetic energy as illustrated in Fig.2.

To achieve this, in the first embodiment in accordance with the present invention, hydrogen ions 23 are accelerated at 2.4 MeV, and then the accelerated ions are irradiated into the silica-based optical fiber 21 with a diameter of 125 µm from above its cladding 22, for example. The hydrogen ions 23 thus implanted lose their kinetic energy and then stop in the core 25 of the optical fiber 21. As a result, the light propagating through the optical fiber is depolarized. In other words, the optical fiber manufactured according to the present invention operates as a depolarizer. Here, the reference numeral 27 designates a position at which the implanted ions stop.

The dose of the ions 23 depends on the length L of the portion 27 where the ions stop. For the length L of the portion 27 of about 1 cm, favorable depolarization is observed in the foregoing hydrogen ion implantation when the optical fiber 21 is irradiated with the hydrogen ions to a dose of about 2 × 10¹⁵/cm².

Implanting the ions over a wider range can further reduce the dose of the ions. The technique is expected to have higher depolarization effect by increasing the length L of the portion 27 or the dose of the ions. In addition, since the depolarization effect is achieved around the portion 27 where the ions 23 stop and at the position through which the ions 23 pass as described before, it is not necessary for the ions 23 to be implanted at the center of the core 25. For example, the depolarization effect is produced in the core when the implanted ions pass through the core. In addition, since the electric field of the light propagating through the core 25 is expanded to the cladding 22 near the core, the depolarization effect is achieved as long as the implanted ions reach the cladding near the core, even if the ions do not reach the core itself.

Furthermore, varying the acceleration energy of the ions during the implantation process can heighten the depolarization effect. This is because the variation in the acceleration energy can vary the projected range of the ions into the optical fiber, thereby being able to increase the thickness of the region in which the ions stop.

Moreover, rotating the optical fiber around its core or varying the direction of the radiation of the ion beam during the ion implantation process has an effect of increasing the region in which the ions stop, thereby being able to heighten the depolarization effect.

The ion implantation may sometimes bring about point defects in the optical fiber, thereby degrading the transmission characteristic of the optical fiber. However, the point defects can be easily removed by heat treatment.

In the core having the depolarization effect, which is produced by the present technique, the light propagating through the core is continuously subjected to the effect of depolarization. Accordingly, polarization dependence does not occur even if the core has birefringence. Consequently, the present invention is applicable to the elimination, reduction or improvement of the polarization dependence of optical components formed in optical fibers such as Bragg reflection gratings or long-period gratings.

The application method is as follows. For example, as for an optical fiber including an optical component, from which polarization dependence is desired to be removed, the polarization dependence is removed by depolarizing the light propagating through the optical fiber by implanting ions into the optical fiber. Alternatively, the ions may be implanted into the optical fiber before the optical component is formed, and then the optical fiber may be used to fabricate the optical component.

As described before, the depolarization effect can be achieved when any kinds of ions are implanted. Thus, the implanted ions 23 may be monoatomic ions (such as H⁺), molecular ions (such as H₂⁺) or cluster ions (such as C₃⁺), however the implanted ions have need to pass through the cladding 22 and stop around the core 25 of the optical fiber. Accordingly, the ion implantation requires very large acceleration energy except that the ions show large penetration depth into a material. Consequently, it is preferable that the implanted ions 23 include charged particles of atoms whose atomic numbers are equal to or smaller than 36.

### (SECOND EMBODIMENT)

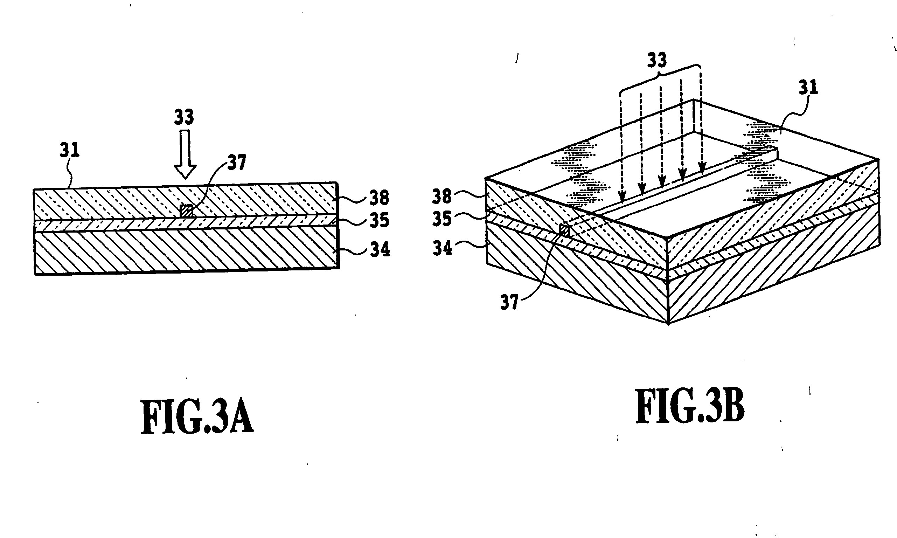

As for an optical waveguide, the depolarization effect of the light propagating through the core can be achieved by implanting ions from above the cladding into or near the core as in the optical fiber above mentioned. Thus, the optical waveguide depolarizer can be formed. The process is shown in Figs. 3A and 3B. Fig. 3A is a front sectional view illustrating an optical waveguide of a second embodiment in accordance with the present invention, and Fig. 3B is its perspective view. The reference numeral 31 designates an optical waveguide, 33 designates an ion beam to be implanted, 34 designates a substrate, 35 designates a lower cladding, 37 designates a core, and 38 designates an upper cladding.

The present embodiment is similar to the first embodiment of Fig. 2 in the implantation method of the ion beam 33, in the position within or near the core 37 where the ions stop by the loss of kinetic energy, and in the effects and advantages at the position where the ions stop. Thus, the detailed description thereof is omitted here.

As described in the first embodiment, the present technique is utilized to eliminate, reduce or improve the polarization dependence. Although Figs. 3A and 3B illustrate the case of a straight waveguide, it is obvious that the present invention is applicable to all types of optical waveguides including a curved waveguide, a branching and/or merging waveguide, or the like. The application of the present technique is easy because it is enough to implant the ions 33 into the optical waveguide. Accordingly, the present invention is easily applicable to devices with complicated configurations such as arrayed waveguide gratings, Mach-Zehnder interferometer type multiplexers & demultiplexers, and directional couplers.

To eliminate the polarization dependence of the optical waveguide, the ions 33 may be implanted into the entire optical waveguide. However, this is not essential: Implanting ions only into a region to be depolarized can reduce the area of the region subjected to the ion implantation, and hence reduce the time required for the fabrication. For example, to depolarize only a portion where a Bragg reflection grating is formed in an optical waveguide, it is enough to implant the ions only to the portion where the Bragg reflection grating is formed.

### (VARIATION OF SECOND EMBODIMENT)

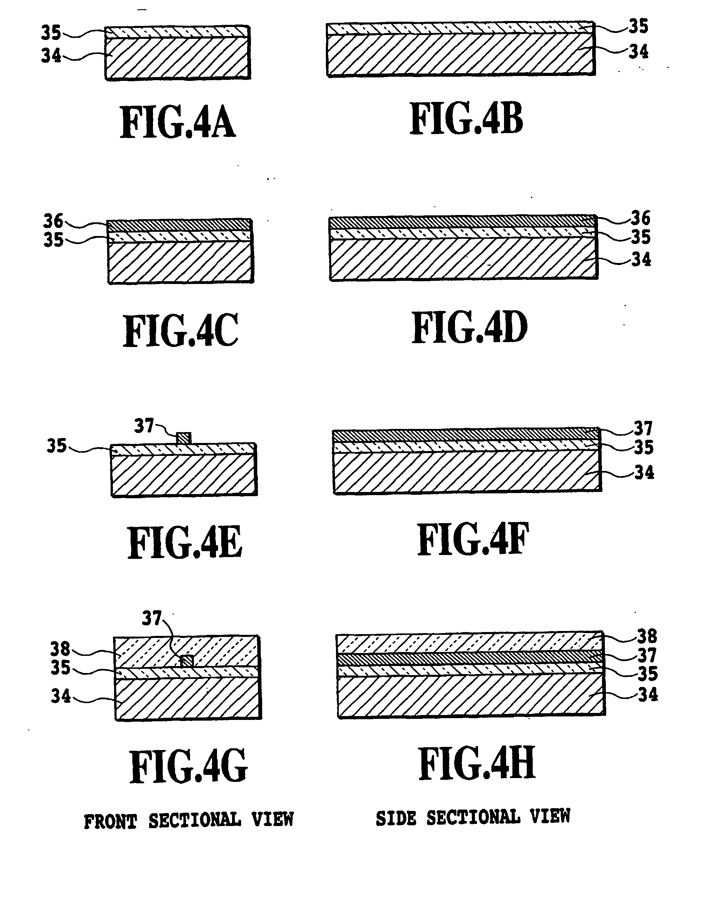

As for the optical waveguide, it is also effective to implant ions under the condition without the upper cladding, as a variation of the second embodiment in accordance with the present invention. This will be described by way of example. First, an ordinary fabrication method of an optical waveguide will be described with reference to Figs. 4A-4H. As shown in Figs. 4A and 4B, a lower cladding 35 is formed on a planar substrate 34. This step can be omitted when the planar substrate 34 constitutes the lower cladding.

Subsequently, as shown in Figs. 4C and 4D, a core layer 36 is formed on the lower cladding 35. Then, as shown in Figs. 4E and 4F, the core layer 36 is shaped into the core 37 of the optical waveguide.

Subsequently, as shown in Figs. 4G and 4H, the optical waveguide is completed by forming an upper cladding 38 on the core 37.

In the foregoing process, the depolarization effect of the optical waveguide and the elimination of the polarization dependence are implemented by implanting ions into the core layer 36 or core 37 at the step shown in Figs. 4C and 4D or at the step shown in Figs. 4E and 4F, that is, from the time after forming the core layer 36 to the time before forming the upper cladding 38.

As described in the first embodiment, the depolarization effect takes place as long as the implanted ions pass through the core even if they do not stop in the core. Accordingly, it is permitted for the implanted ions to pass across the core layer 36 or core 37, and to reach the lower cladding 35.

In the present variation, the ion implantation is carried out under the condition without the upper cladding 38. Thus, it offers an advantage of being able to reduce the acceleration energy of the ions to be implanted into the core layer 36, or into the core 37, or into the lower cladding 35 under the core. Therefore it is not necessary to restrict the ion species to be implanted in the present variation.

The present invention has been described in detail with respect to preferred embodiments, and it will now be apparent from the foregoing to those skilled in the art that changes and modifications may be made without departing from the invention as defined by the apended claims.

## Claims

1. A method of fabricating an optical component that has substantially no polarization dependency, which method comprises:
forming the optical component from a core (25) in which light can propagate, and a cladding (22) with a refractive index lower than that of said core (25),
creating a depolarizer within the optical component, **characterised in that** the depolarizer is created by implanting accelerated ions (23) from outside into at least part of a region formed of said core (25) and said cladding (22) near said core (25) such that at least part of the implanted ions stop in said region by the loss of kinetic energy, whereby light propagating through said core (25) is depolarized.

2. The method as claimed in claim 1, wherein the optical component comprises an optical fiber.

3. The method of claim 1, wherein said optical component comprises an optical waveguide formed on a planar substrate (34) and including a core (37) in which light can propagate, and upper and lower claddings (35, 38) with a refractive index lower than that of said core (37), wherein
said step of creating a polarizer comprises implanting accelerated ions (33) from above the upper cladding (38) of said optical waveguide (31) into at least part of a region formed of said core (37) and said claddings (35, 38) near said core (37) such that at least part of the implanted ions stop in said region by the loss of kinetic energy.

4. The method of claim 1, wherein said optical component comprises an optical waveguide formed on a planar substrate (34), and including a core (37) in which light can propagate, and upper and lower claddings (35, 38) with a refractive index lower than that of said core (37), wherein:
the step of forming the optical component includes forming said lower cladding (35) and a part (36) that is to become said core (37) on said planar substrate (34); and
said step of creating a polarizer comprises implanting accelerated ions (33) into at least part of a region formed by (a) the part that is to become said core (37) and (b) said lower cladding (35), such that at least part of the implanted ions stop in said region by the loss of kinetic energy and the method further includes the step of forming an upper cladding (38) on said core (37) to embed the core.

5. A method as claimed in any of claims 1 to 4, wherein the optical component is an optical communication device or sensor, whose characteristics depend on the polarization state of the light it receives.

6. A method of depolarizing light which comprises propagating the radiation through an optical component formed by the method of any one of claims 1 to 4.

7. A method as claimed in claim 6, wherein the optical component is an optical communication device or sensor.

## Patentansprüche

1. Verfahren zur Herstellung einer optischen Komponente, die im Wesentlichen keine Polarisationsabhängigkeit aufweist, das Verfahren umfasst dabei die Schritte:
Ausbilden der optischen Komponente aus einem Kern (25), in dem sich Licht ausbreiten kann, und einem Mantel (22) mit einem niedrigeren Brechungsindex als dem des Kerns (25); und
Erzeugen eines Depolarisators innerhalb der optischen Komponente,
**dadurch gekennzeichnet, dass**
der Depolarisator durch Implantieren von beschleunigten Ionen (23) von außerhalb in zumindest einen Teil eines aus dem Kern (25) und dem Mantel (22) nahe dem Kern (25) ausgebildeten Bereich derart erzeugt wird, dass zumindest ein Teil der implantierten Ionen in dem Bereich durch den Verlust von kinetischer Energie stoppen, wodurch sich durch den Kern (25) ausbreitendes Licht depolarisiert wird.

2. Verfahren nach Anspruch 1, wobei die optische Komponente eine optische Faser umfasst.

3. Verfahren nach Anspruch 1, wobei die optische Komponente einen auf einem ebenen Substrat (34) ausgebildeten optischen Wellenleiter, der einen Kern (37) beinhaltet, in dem sich Licht ausbreiten kann, sowie einen oberen und einen unteren Mantel (35, 38) mit einem niedrigeren Brechungsindex als dem des Kerns (37) umfasst, wobei
der Schritt zum Erzeugen eines Depolarisators das Implantieren von beschleunigten Ionen (33) von oberhalb des oberen Mantels (38) des optischen Wellenleiters (31) in zumindest einen Teil eines aus dem Kern (37) und den Mänteln (35, 38) nahe dem Kern (37) ausgebildeten Bereich derart umfasst, dass zumindest ein Teil der implantierten Ionen in dem Bereich durch den Verlust von kinetischer Energie stoppen.

4. Verfahren nach Anspruch 1, wobei die optische Komponente einen auf einem ebenen Substrat (34) ausgebildeten optischen Wellenleiter, der einen Kern (37) beinhaltet, indem sich Licht ausbreiten kann, sowie einen oberen und einen unteren Mantel (35, 38) mit einem kleineren Brechungsindex als dem des Kerns (37) umfasst, wobei
der Schritt zum Ausbilden der optischen Komponente das Ausbilden des unteren Mantels (35) und eines Teils (36), welcher der Kern (37) werden soll, auf dem ebenen Substrat (34) beinhaltet; und
der Schritt zum Erzeugen eines Depolarisators das Implantieren von beschleunigten Ionen (33) in zumindest einen Teil eines durch (a) den Teil, welcher der Kern (37) werden soll, und (b) den unteren Mantel (35) ausgebildeten Bereichs derart umfasst, dass zumindest ein Teil der implantierten Ionen in dem Bereich durch den Verlust von kinetischer Energie stoppen, und das Verfahren zudem einen Schritt zum Ausbilden eines oberen Mantels (38) auf dem Kern (37) zum Einbetten des Kerns beinhaltet.

5. Verfahren nach einem der Ansprüche 1 bis 4, wobei die optische Komponente eine optische Kommunikationsvorrichtung oder ein Sensor ist, dessen Eigenschaften von dem Polarisationszustand des Lichtes abhängen, das er empfängt.

6. Verfahren zum Depolarisieren von Licht, mit dem Schritt Ausbreiten einer Strahlung durch eine durch das Verfahren gemäß einem der Ansprüche 1 bis 4 ausgebildete optische Komponente.

7. Verfahren nach Anspruch 6, wobei die optische Komponente eine optische Kommunikationsvorrichtung oder ein Sensor ist.

## Revendications

1. Procédé de fabrication d'un composant optique qui n'a sensiblement pas de dépendance de polarisation, le procédé comprenant :
la formation du composant optique à partir d'un coeur (25) dans lequel de la lumière peut se propager et d'une gaine (22) d'un indice de réfraction plus petit que celui du coeur (25),
la création d'un dépolariseur dans le composant optique, **caractérisé en ce que** l'on crée le dépolariseur en implantant des ions (23) accélérés de l'extérieur dans au moins une partie d'une région formée du coeur (25) et de la gaine (22) à proximité du coeur (25), de sorte qu'au moins une partie des ions implantés s'arrête dans la région par la perte d'énergie cinétique, en sorte que de la lumière se propageant dans le coeur (25) est dépolarisée.

2. Procédé suivant la revendication 1, dans lequel le composant optique comprend une fibre optique.

3. Procédé suivant la revendication 1, dans lequel le composant optique comprend un guide d'onde optique formé sur un substrat (34) planaire et comportant un coeur (37) dans lequel de la lumière peut se propager et des gaines (35, 38) supérieure et inférieure d'un indice de réfraction plus petit que celui du coeur (37), dans lequel
le stade de création d'un polariseur comprend l'implantation d'ions (33) accélérés par au-dessus de la gaine (38) supérieure du guide d'onde (31) optique dans au moins une partie d'une région formée du coeur (37) et des gaines (35, 38) à proximité du coeur (37), de façon à ce qu'au moins une partie des ions implantés s'arrête dans la région par la perte d'énergie cinétique.

4. Procédé suivant la revendication 1, dans lequel le composant optique comprend un guide d'onde optique formé sur un substrat (34) planaire et comportant un coeur (37) dans lequel de la lumière peut se propager et des gaines (35, 38) supérieure et inférieure d'un indice de réfraction plus petit que celui du coeur (37), dans lequel :
le stade de formation du composant optique comprend la formation de la gaine (35) inférieure et d'une partie (36) qui va devenir le coeur (37) sur le substrat (34) planaire ; et
le stade de création d'un polariseur comprend l'implantation d'ions (33) accélérés dans au moins une partie d'une région formée par (a) la partie qui va devenir le coeur (37) et (b) la gaine (35) inférieure, de façon à ce qu'au moins une partie des ions implantés s'arrête dans la région par la perte d'énergie cinétique, et le procédé comprend en outre le stade de formation d'une gaine (38) supérieure sur le coeur (37) pour enrober le coeur.

5. Procédé suivant l'une quelconque des revendications 1 à 4, dans lequel le composant optique est un dispositif de communication optique ou un capteur dont les caractéristiques dépendent de l'état de polarisation de la lumière qu'il reçoit.

6. Procédé de dépolarisation de la lumière dans lequel on fait se propager le rayonnement dans un composant optique formé par le procédé suivant l'une quelconque des revendications 1 à 4.

7. Procédé suivant la revendication 6, dans lequel le composant optique est un dispositif de communication optique ou un capteur.
